# EUROPÄISCHE PATENTSCHRIFT

(11) **EP 2 434 177 B1**
(45) Veröffentlichungstag und Bekanntmachung des Hinweises auf die Patenterteilung: **05.05.2021**
(21) Anmeldenummer: 11001731.6
(22) Anmeldetag: 02.03.2011
(51) Int. Cl.: F16F 15/14

(54) **Vorrichtung zum Tilgen von Drehschwingungen**
Device for dampening rotation vibrations
Dispositif de réduction de vibrations de torsion

(30) Priorität: 23.09.2010 DE 102010046413
(43) Veröffentlichungstag der Anmeldung: 28.03.2012
(73) Patentinhaber: MAN Truck & Bus SE, 80995 München (DE)
(72) Erfinder: Burkhardt, Wolfgang, 91522 Ansbach (DE)
(74) Vertreter: Liebl, Thomas

(56) Entgegenhaltungen:
- DE-A1- 3 811 222
- DE-A1-102007 054 574
- DE-A1-102009 012 137
- DE-C1- 19 646 134
- JP-A- 2006 090 528
- US-A- 4 223 565
- US-A- 4 516 955
- US-A1- 2009 078 079

## Beschreibung

Die vorliegende Erfindung betrifft eine Vorrichtung zum Tilgen von Drehschwingungen in Antriebssystemen, insbesondere von Brennkraftmaschinen, gemäß dem Oberbegriff des Patentanspruches 1 und gemäß dem Oberbegriff des Patentanspruchs 2.

An Antriebssystemen treten insbesondere bei Brennkraftmaschinen drehzahlabhängige Drehungleichförmigkeiten auf. Diese sind ordnungsbezogen und abhängig von der Bauform der Maschine oder des Antriebes. Der Frequenzbereich dieser Schwingungen ist vom Drehzahlbereich und von den konstruktionstypischen Drehzahlordnungen beschrieben. Auch können sich bei der Applikation von Brennkraftmaschinen in bestimmten Einbauten mit Wellen, Kupplungen und Getrieben ordnungsbezogene Drehschwingungsprobleme ergeben.

Durch die DE 597 091 ist eine ordnungsbezogene Vorrichtung zur Tilgung von Drehschwingungen bekannt, bei der zumindest eine Tilgermasse über Pendel und Führungen relativ zu einer Welle frei beweglich angeordnet ist. Die Eigenkreisfrequenz derartiger Tilger im Fliehkraftfeld ist der Drehzahl proportional; d. h., es wird nicht eine Frequenz beeinflusst, sondern eine Drehordnung. Entsprechend der Quadratwurzel aus Verhältnis des Abstandes der Drehachse der Tilgermasse zu deren Pendellänge ergibt sich die zugehörige Ordnungszahl.

Die EP 1 427 952 B1 beschreibt einen weiteren Drehschwingungsdämpfer, der als Ausgleichsgewicht an der Kurbelwange einer Kurbelwelle einer Brennkraftmaschine angeordnet ist und in den eine über zwei eingesetzte Blattfedern schwingfähige Tilgermasse integriert ist. Es ist aber nicht auszuschließen, dass durch die erforderliche Lagerung der Blattfedern und bei längerer Betriebsdauer der Vorrichtung unerwünschter Verschleiß in den schwingungsbeanspruchten Teilen auftritt.

Aus der JP 2006 090 528 A ist eine Vorrichtung zum Kontrollieren von Vibrationen für eine Drehwelle bekannt.

Die DE 38 11 222 A1 beschreibt eine Bremsscheibe für Scheibenbremsen.

Die US 2009/ 078 079 A1 zeigt einen Torsions-Schwingungsdämpfer.

Aufgabe der Erfindung ist es, die gattungsgemäße Vorrichtung konstruktiv einfacher und funktionell robuster auszubilden und gegebenenfalls verschleißbedingte Verstimmungen des Systems zu vermeiden.

Die vorgenannte Aufgabe wird erfindungsgemäß mit den Merkmalen des Patentanspruches 1 bzw. den Merkmalen des Patentanspruchs 2 gelöst. Vorteilhafte Weiterbildungen und Ausgestaltungen der Erfindung sind in den Unteransprüchen aufgeführt.

Erfindungsgemäß wird zum einen vorgeschlagen, dass die Tilgermasse nur über ein fest mit dem Bauteil verbundenes bzw. bauteilfestes Torsionselement mit dem Bauteil verbunden ist, wobei die Tilgermasse unmittelbar dem drehenden Bauteil axial benachbart angeordnet ist und das Torsionselement durch einen Drehfederstab gebildet ist, dessen Befestigungspunkte in einem definierten, axialen Abstand zueinander am Bauteil und an der Tilgermasse positioniert sind. Die Tilgermasse schwingt somit bei einer baulich besonders einfachen Gestaltung verschleißfrei um den eingesetzten Drehfederstab.

Erfindungsgemäß wird zum anderen vorgeschlagen, dass die Tilgermasse über ein in das Bauteil integriertes Biegefederelement mit dem Bauteil dergestalt verbunden ist, dass die Tilgermasse mit wenigstens einem zumindest teilweise umlaufenden Freischnitt in das Bauteil integriert ist, wobei ein zwischen dem Bauteil und der Tilgermasse belassener, radial ausgerichteter Steg als Biegefederelement dient, wobei das Bauteil und die Tilgermasse eine bauliche Einheit sind, die einstückig und materialeinheitlich ausgebildet sind, und wobei die Freischnitte in ihrer Breite so ausgeführt sind, dass sie als Anschläge in Umfangsrichtung wirkend nur einen definierten Drehwinkelausschlag der Tilgermasse in +/- Umfangsrichtung zulassen. Damit sind das Bauteil und die Tilgermasse eine bauliche Einheit bzw. einstückig und/oder materialeinheitlich ausgeführt, wodurch u. a. jeglicher Montageaufwand für zusätzliche Federelemente oder zusätzlicher Einbauraum entfällt.

Daraus resultiert eine verschleißfeste Konstruktion, bei der jegliche gegebenenfalls spielbehaftete Lagerelemente vermieden sind; ferner ist eine exakte, sich im Dauerbetrieb nicht verstimmende Zuordnung der Tilgermasse auf die ordnungsbezogenen Drehschwingungen sichergestellt.

Um unzulässige Bauteilbelastungen auszuschließen, ist es dazu besonders vorteilhaft, wenn der als Biegefeder dienende Bereich durch Härten, Rollieren, Verfestigungsstrahlen etc. in seiner Materialfestigkeit erhöht wird.

Die Tilgermasse kann ferner in für rotationssymmetrische Bauteile besonders vorteilhafter Weise kreissektorförmig mit V-förmig nach innen geneigten Flanken ausgeführt sein und sich somit optimal in das Bauteil einfügen, wobei gegebenenfalls der radial äußere Umfangsbereich der Tilgermasse mit dem rotationssymmetrischen Außenumfang des drehenden Bauteiles zusammenfallen kann.

Des Weiteren sind erfindungsgemäß die Freischnitte in ihrer Breite so ausgeführt, dass sie als Anschläge in Umfangsrichtung wirkend nur einen definierten Drehwinkelausschlag der Tilgermasse in +/- Richtung zulassen. Der Bereich definiert sich einerseits aus der zulässigen Belastung des Torsions- oder Biegefederelementes und dem nutzbaren Effekt der aufgeprägten Gegenschwingungen.

Die Freischnitte können in ihrer konstruktiven Ausbildung zwischen der Tilgermasse und dem Bauteil mit in Umfangsrichtung verlaufenden Abschnitten am Steg enden. Bei Vorgabe einer größeren Schwingamplitude können in vorteilhafter Weise die Freischnitte zwischen der Tilgermasse und dem Bauteil an dem vorzugsweise radial ausgerichteten Steg entlang wieder nach außen bzw. in die Tilgermasse hinein ausgeführt sein; daraus resultiert eine größere Länge des Steges mit entsprechend größeren Schwingamplituden bei gegebenenfalls geringerem Rückstellmoment in die Grundstellung der Tilgermasse.

In besonders vorteilhafter Weise kann bei einem Bauteil mit rotationssymmetrisch umlaufendem Außenumfang die Tilgermasse vollständig in das Bauteil integriert sein, wobei der Freischnitt ausgehend von dem Steg die Tilgermasse über deren gesamten Außenumfang umschließt und zwischen der Tilgermasse und dem Bauteil ein stegartiger Umfangsabschnitt gebildet ist. Insbesondere wenn das Bauteil die Schwungscheibe an der Kurbelwelle einer Brennkraftmaschine ist und an dem Außenumfang der Schwungscheibe ein Anlasserzahnkranz ausgebildet ist, kann dieser gegebenenfalls unmittelbar in den dann ununterbrochenen Außenumfang eingearbeitet oder problemlos auf diesen aufgezogen sein.

Der an der Tilgermasse ausgebildete Freiraum kann fertigungstechnisch besonders günstig strahltechnisch durch Strahlschneiden, insbesondere durch Laserstrahlen oder Wasserstrahlen oder Brennstrahlen, etc., eingearbeitet sein.

In weiterer, vorteilhafter Ausgestaltung der Erfindung kann zwischen den die Freiräume begrenzenden Flanken des Bauteiles und der Tilgermasse wenigstens ein vorzugsweise durch elastische Puffer gebildetes elastisch nachgiebiges Anschlagelement angeordnet sein, die gegebenenfalls ein Anschlagen oder Prellen der Tilgermasse gegen das umgebende Bauteil dämpfen. In Weiterbildung dieser Ausführung können die elastischen Puffer bzw. das wenigstens eine Anschlagelement zur zusätzlichen Beeinflussung der Tilgerwirkung die Freiräume lokal vollständig ausfüllen und somit ein modifiziertes Schwingverhalten der Tilgermasse ermöglichen.

Des Weiteren können in dem drehenden Bauteil mehrere integrierte Tilgermassen vorgesehen sein, die durch ihre geometrische Konstruktion und Auslegung auf unterschiedliche Drehschwingungsordnungen eingestellt sind und somit vorteilhaft ein größeres Schwingungsspektrum abdecken.

Als drehende Bauteile des Antriebssystems können Gegengewichte an Kurbelwellen oder Schwungräder oder Riemenscheiben von Brennkraftmaschinen und/oder Flansche an Gelenkwellen und/oder Kupplungselemente verwendet sein, die mit entsprechenden Tilgermassen versehen sind.

Mehrere Ausführungsbeispiele der Erfindung sind im Folgenden anhand der anliegenden, grob schematischen Zeichnung näher erläutert. Es zeigen:
- Fig. 1: ein scheibenförmiges Schwungrad einer nicht dargestellten Kurbelwelle des Kurbeltriebes einer Brennkraftmaschine als Antriebssystem, an das axial benachbart eine Tilgermasse angebaut ist, die über eine Drehstabfeder mit dem Schwungrad verbunden ist;
- Fig. 2: ein Schnitt gemäß Linie II - II der Fig. 1 durch das Schwungrad und die Tilgermasse mit Drehstabfeder;
- Fig. 3: eine alternative Ausgestaltung eines Schwungrades mit einer einstückig angeformten, durch Freischnitte herausgearbeiteten Tilgermasse mit relativ kurzem Steg als Verbindung zum Schwungrad;
- Fig. 4: eine weitere, alternative Ausgestaltung des Schwungrades nach Fig. 3 mit durch modifizierte Freischnitte verlängertem Steg;
- Fig. 5: eine weitere, alternative Ausgestaltung eines Schwungrades mit einer einstückig angeformten, durch umlaufende Freischnitte vollständig integrierter Tilgermasse; und
- Fig. 6: das Schwungrad nach Fig. 3 mit an den Flanken zwischen der Tilgermasse und dem Schwungrad in den Freischnitten angeordneten, elastischen Puffern.

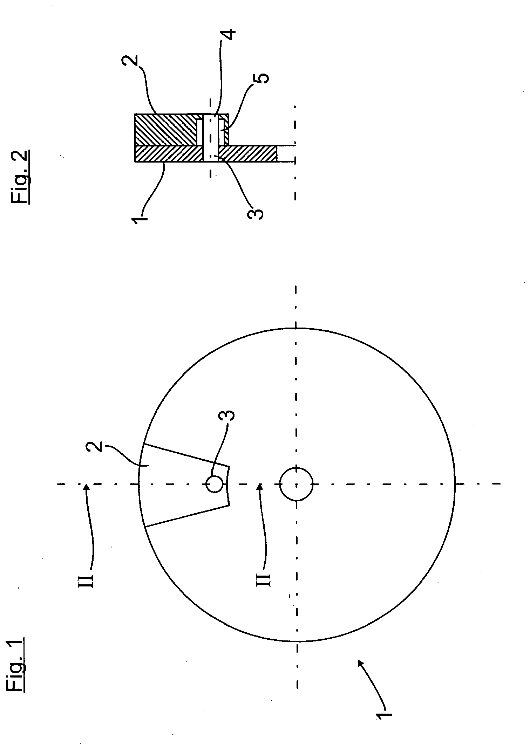

Die Fig. 1 und 2 zeigen ein erstes Schwungrad 1, das in nicht dargestellter Weise an der Kraftabgabeseite einer Brennkraftmaschine befestigt ist. An das im Wesentlichen scheibenförmige Schwungrad 1 ist beispielsweise eine Reibungskupplung oder ein Drehmomentwandler eines nachgeschalteten Geschwindigkeits-Wechselgetriebes angebaut. Gegebenenfalls kann an dem Außenumfang des Schwungrades 1 ferner ein Zahnkranz angeformt oder aufgezogen sein, der im Zusammenwirken mit einem elektrischen Anlassermotor zum Starten der Brennkraftmaschine dient.

Das scheibenförmige Schwungrad 1 trägt eine kreissektorförmige Tilgermasse 2, die über eine fest in das Schwungrad 1 und in die Tilgermasse 2 eingesetzte Drehstabfeder 3 in +/- Umfangsrichtung zum Schwungrad 1 schwingfähig gehalten ist.

Dazu ist die Drehstabfeder 3 nur im Schwungrad 1 insgesamt fest angeordnet, während sie in der breiteren Tilgermasse 2 nur an deren äußeren, dem Schwungrad 1 gegenüberliegenden Randbereich 4 befestigt ist und dazwischen durch Einbringen einer im Durchmesser größeren Bohrung 5 (übertrieben dargestellt) frei beweglich ist bzw. nicht festsitzt.

Der frei bewegliche Abschnitt der Drehstabfeder 3 aus Federstahl ermöglicht somit in definiertem Ausmaß bei auftretenden Drehungleichförmigkeiten am Schwungrad 1 in der eingestellten Schwingungsordnung entsprechend ausgeprägte Gegenschwingungen. Die Wirkung der Schwingungstilgung ist dabei wie eingangs angeführt u. a. durch die Eigenkreisfrequenz der Tilgermasse 2 und durch die Pendellänge (Abstand der Drehstabfeder 3 zur Drehachse des Schwungrades 1) definiert.

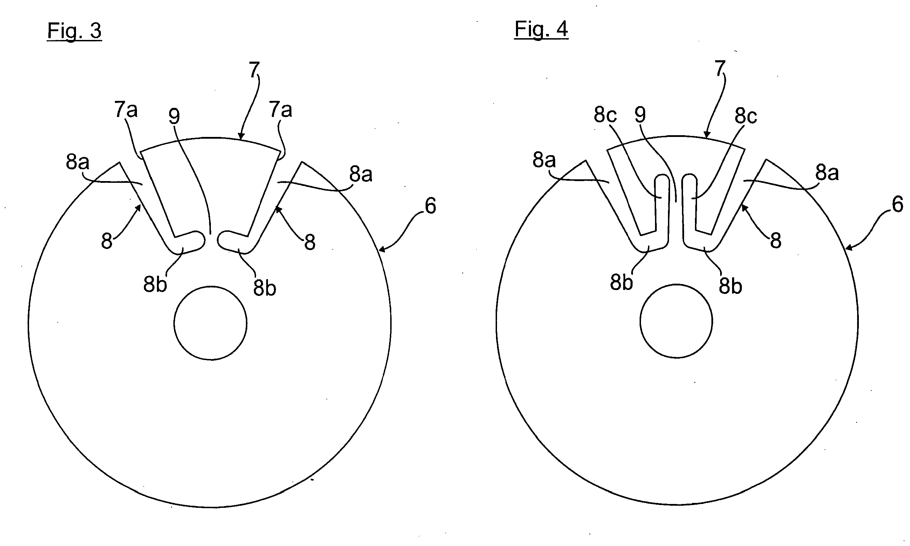

Die Fig. 3 zeigt eine weitere Ausführungsform, bei der in das wiederum scheibenförmige Schwungrad 6 eine kreissektorförmige Tilgermasse 7 integriert ist, deren Außenumfang mit dem Außenumfang des Schwungrades 6 zusammenfällt.

Die Tilgermasse 7 ist einstückig mit dem Schwungrad 6 ausgebildet und durch in das Schwungrad 6 eingearbeitete Freischnitte 8 gebildet, die in einer definierten Breite hergestellt sind und entlang den V-förmig nach innen verlaufenden Flanken 7a der Tilgermasse 7 von deren radialen Abschnitten 8a bis zu abknickenden Umfangsabschnitten 8b verlaufen und dort an einem radial ausgerichteten Steg 9 des Schwungrades 6 enden.

Die Breite der Freischnitte 8 ist so berechnet, dass eine definierte Schwingungsamplitude in +/- Umfangsrichtung der Tilgermasse 7 möglich ist. Diese Breite definiert sich aus der effektiv nutzbaren Schwingungstilgung einerseits und aus der möglichen elastischen Verformung des Steges 9 unter Berücksichtigung der Werkstoffeigenschaften des Schwungrades 1 andererseits. Die Flanken 7a wirken dementsprechend unmittelbar mit den benachbarten Flanken des Schwungrades 6 als Anschläge zur Begrenzung der Schwingungsausschläge der Tilgermasse 7 zusammen.

Zur Verfestigung des relativ hoch belasteten Steges 9 ist dieser einer Materialverfestigung unterzogen, die z. B. durch Verfestigungsstrahlen, Rollieren oder Härten bewirkt sein kann.

Die Fig. 4 zeigt eine zur Fig. 3 modifizierte Ausbildung des Schwungrades 6 und der Tilgermasse 7, funktionell gleiche Teile sind mit gleichen Bezugszeichen versehen.

Gemäß Fig. 4 weisen die entlang der Tilgermasse 7 eingearbeiteten Freischnitte 8 neben den radialen Abschnitten 8a und den Umfangsabschnitten 8b einen weiteren, abknickenden Abschnitt 8c auf, der wieder radial nach außen geführt ist und sich in die Tilgermasse 7 über eine definierte Länge hineinerstreckt.

Daraus resultiert wie aus der Zeichnung Fig. 4 ohne weiteres ersichtlich ist, dass die radiale Erstreckung des Steges 9 wesentlich verlängert ist, wodurch sowohl dessen Federeigenschaften und damit verbunden das Schwingverhalten der Tilgermasse 7 verändert ist. Die Ausbildung der Tilgermasse 7 und die durch die Freischnitte 8c mögliche Ausbildung des Steges 9 als Biegefederelement ermöglichen eine gezielte Beeinflussung der ordnungsadaptiven Schwingungstilgung des Antriebssystems mit dem Schwungrad 6.

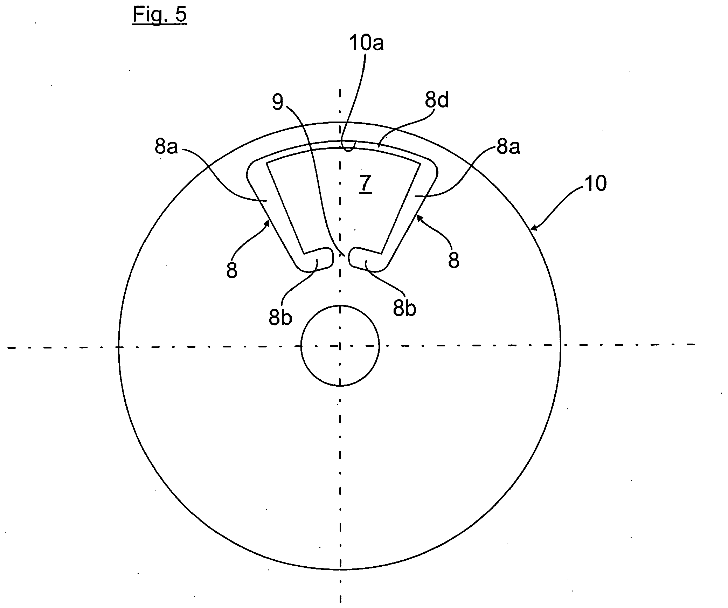

Die Fig. 5 zeigt ein weiteres, alternatives Ausführungsbeispiel, bei dem das scheibenförmige Schwungrad 10 eine vollständig in den Radkörper integrierte Tilgermasse 7 aufweist. Die Beschreibung beschränkt sich auf die gegenüber der Fig. 3 wesentlichen Unterschiede. Funktionell gleiche Teile sind mit gleichen Bezugszeichen versehen.

In der Fig. 5 gehen die Freischnitte 8 für die Tilgermasse 7 radial außen in einen kreissymmetrischen Umfangsabschnitt 8d über, der sich zwischen dem Außenumfang der Tilgermasse 7 und einem Umfangssteg 10a des Schwungrades 10 erstreckt. Die Breite des Umfangsabschnittes 8d ist wie ersichtlich geringer als die Breite der Freischnittabschnitte 8a, 8b ausgeführt.

Auf den dadurch ununterbrochenen Außenumfang des Schwungrades 10 kann gegebenenfalls ein Zahnkranz für einen elektrischen Startermotor (nicht dargestellt) aufgezogen oder eingeformt sein. Die Funktion der Tilgermasse 7 ist im Übrigen wie vorgeschrieben.

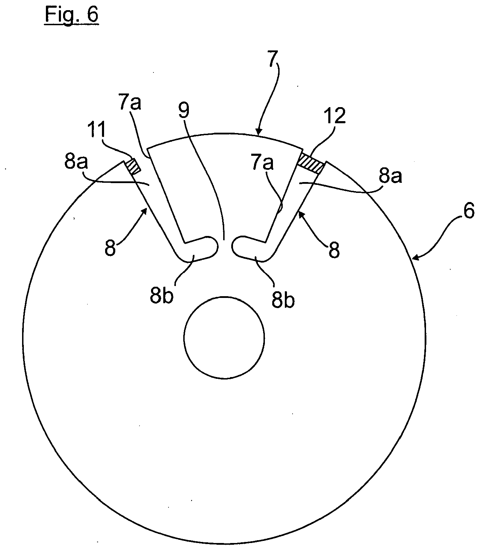

Die Fig. 6 schließlich zeigt ein zur Fig. 3 konformes Schwungrad 6, bei dem zwischen die Flanken 7a der Tilgermasse 7 und den benachbarten Flanken des Schwungrades 6 gummielastische Puffer 11 oder 12 in die Freischnitte 8a eingebracht sind.

Die Puffer 11 oder 12 dienen als elastische Anschlagbegrenzer zwischen der Tilgermasse 7 und dem Schwungrad 6 und können an den dargestellten lokalen Stellen der Freischnitte 8a teilweise und mit Umfangsspiel (Puffer 11) für die Tilgermasse 7 oder vollständig ohne Umfangsspiel (Puffer 12) anliegen. Während die Puffer 11 insbesondere als Anschlagbegrenzer wirken, kann durch den Einsatz der Puffer 12 vermehrt das Schwingverhalten der Tilgermasse 7 gezielt beeinflusst bzw. abgestimmt werden.

Die Puffer 11 oder 12 können zum Beispiel durch Klebeverbindungen oder formschlüssig in den Freischnitten 8a bzw. am Schwungrad 6 und/oder an der Tilgermasse 7 befestigt sein.

Die Freischnitte 8 gemäß den Fig. 3 bis 6 sind durch Schneiden mit dem Laserstrahl in das Schwungrad 6 bzw. 10 eingearbeitet. Gegebenenfalls können auch Wasserstrahl- oder weitere Brennstrahlverfahren eingesetzt sein.

Obwohl in den Ausführungsbeispielen jeweils nur eine Tilgermasse 2, 7 dargestellt ist, können gegebenenfalls auch mehrere, umfangsversetzte und auf andere Ordnungszahlen abgestimmte Tilgermassen 7 vorgesehen sein.

Anstelle eines Schwungrades 1, 6, oder 10 kann die beschriebene, ordnungsadaptive Schwingungstilgung auch an Ausgleichsgewichten von Kurbelwellen, an Riemenscheiben, etc. angewendet sein. Weitere Anwendungsgebiete können auch der Brennkraftmaschine nachgeschaltete Antriebssysteme wie Wellen oder Flansche von Getrieben oder Gelenkwellen in Kraftfahrzeugen sein.

### Bezugszeichenliste

- 1: Schwungrad
- 2: Tilgermasse
- 3: Drehstabfeder
- 4: Randbereich
- 5: Bohrung
- 6: Schwungrad
- 7: Tilgermasse
- 7a: Flanken
- 8: Freischnitte
- 8a: radialer Abschnitt
- 8b: Umfangsabschnitt
- 8c: radialer Abschnitt
- 8d: Umfangsabschnitt
- 9: Steg
- 10: Schwungrad
- 10a: Umfangssteg
- 11: Puffer
- 12: Puffer

## Patentansprüche

1. Vorrichtung zum Tilgen von Drehschwingungen in Antriebssystemen, insbesondere von Brennkraftmaschinen, bei dem in einem mit dem Antriebssystem drehenden Bauteil zumindest ein Schwingungstilger angeordnet ist, der zur ordnungsadaptiven Ausbildung eine in einem definierten Tilgerdrehkreis positionierte Tilgermasse und eine die Tilgermasse schwingfähig haltende Führung aufweist,
wobei die Tilgermasse (2) nur über ein fest mit dem Bauteil (1) verbundenes Torsionselement (3) mit dem Bauteil (1) verbunden ist, **dadurch gekennzeichnet, dass** die Tilgermasse (2) unmittelbar dem drehenden Bauteil (1) axial benachbart angeordnet ist und das Torsionselement durch einen Drehfederstab (3) gebildet ist, dessen Befestigungspunkte in einem definierten, axialen Abstand (5) zueinander am Bauteil (1) und an der Tilgermasse (2) positioniert sind.

2. Vorrichtung zum Tilgen von Drehschwingungen in Antriebssystemen, insbesondere von Brennkraftmaschinen, bei dem in einem mit dem Antriebssystem drehenden Bauteil zumindest ein Schwingungstilger angeordnet ist, der zur ordnungsadaptiven Ausbildung eine in einem definierten Tilgerdrehkreis positionierte Tilgermasse und eine die Tilgermasse schwingfähig haltende Führung aufweist,
wobei die Tilgermasse (7) über ein in das Bauteil (1) integriertes Biegefederelement (9) mit dem Bauteil (6; 10) dergestalt verbunden ist, dass die Tilgermasse (7) mit wenigstens einem zumindest teilweise umlaufenden Freischnitt (8) in das Bauteil (6; 10) integriert ist, wobei ein zwischen dem Bauteil (6; 10) und der Tilgermasse (7) belassener, radial ausgerichteter Steg (9) als Biegefederelement dient und wobei das Bauteil (1) und die Tilgermasse (7) eine bauliche Einheit sind, die einstückig und materialeinheitlich ausgebildet sind,
**dadurch gekennzeichnet, dass** die Freischnitte (8) in ihrer Breite so ausgeführt sind, dass sie als Anschläge in Umfangsrichtung wirkend nur einen definierten Drehwinkelausschlag der Tilgermasse (7) in +/-Umfangsrichtung zulassen.

3. Vorrichtung nach Anspruch 2, **dadurch gekennzeichnet, dass** der als Biegefeder (9) dienende Bereich durch Härten, Rollieren, Verfestigungsstrahlen etc. in seiner Materialfestigkeit erhöht ist.

4. Vorrichtung nach Anspruch 2 oder 3, **dadurch gekennzeichnet, dass** die Tilgermasse (7) kreissektorförmig mit V-förmig nach innen geneigten Flanken (7a) ausgeführt ist.

5. Vorrichtung nach einem der Ansprüche 2 bis 4, **dadurch gekennzeichnet, dass** die Freischnitte (8) zwischen der Tilgermasse (7) und dem Bauteil (6; 10) mit in Umfangsrichtung verlaufenden Abschnitten (8b) am Steg (9) enden.

6. Vorrichtung nach einem der Ansprüche 2 bis 4, **dadurch gekennzeichnet, dass** die Freischnitte (8c) zwischen der Tilgermasse (7) und dem Bauteil (6) an dem vorzugsweise radial ausgerichteten Steg (9) entlang nach außen und in die Tilgermasse (7) hinein ausgeführt sind.

7. Vorrichtung nach einem der Ansprüche 2 bis 6, **dadurch gekennzeichnet, dass** bei einem Bauteil (10) mit rotationssymmetrisch umlaufendem Außenumfang die Tilgermasse (7) vollständig in das Bauteil (10) integriert ist, wobei der Freischnitt (8) ausgehend von dem Steg (9) die Tilgermasse (7) über deren gesamten Außenumfang umschließt und zwischen der Tilgermasse (7) und dem Bauteil (10) ein stegartiger Umfangsabschnitt (10a) gebildet ist.

8. Vorrichtung nach Anspruch 7, **dadurch gekennzeichnet, dass** das Bauteil die Schwungscheibe (10) an der Kurbelwelle einer Brennkraftmaschine ist und das an dem Außenumfang der Schwungscheibe (10) eine Anlasserzahnkranz ausgebildet ist.

9. Vorrichtung nach einem der Ansprüche 2 bis 8, **dadurch gekennzeichnet, dass** der an der Tilgermasse (7) ausgebildete Freischnitt (8) strahltechnisch durch Laserstrahlen oder Wasserstrahlen oder Brennstrahlen eingearbeitet ist.

10. Vorrichtung nach einem der Ansprüche 2 bis 9, **dadurch gekennzeichnet, dass** zwischen den die Freischnitte (8a) begrenzenden Flanken des Bauteiles (6) und der Tilgermasse (7) wenigstens ein vorzugsweise durch elastische Puffer (11, 12) gebildetes Anschlagelement angeordnet ist.

11. Vorrichtung nach Anspruch 10, **dadurch gekennzeichnet, dass** das Anschlagelement (12) die Freischnitte (8a) zur Beeinflussung der Tilgerwirkung lokal vollständig ausfüllen.

12. Vorrichtung nach einem der Ansprüche 2 bis 11, **dadurch gekennzeichnet, dass** in dem drehenden Bauteil (6; 10) mehrere integrierte Tilgermassen (7) vorgesehen sind, die durch geometrische Konstruktion und Auslegung auf unterschiedliche Drehschwingungsordnungen eingestellt sind.

13. Vorrichtung nach einem der Ansprüche 2 bis 12, **dadurch gekennzeichnet, dass** als drehende Bauteile des Antriebssystems Gegengewichte an Kurbelwellen oder Schwungräder (6; 10) oder Riemenscheiben von Brennkraftmaschinen und/oder Flansche an Gelenkwellen und/oder Kupplungselemente vorgesehen sind.

## Claims

1. Device for absorbing rotational vibrations in drive systems, in particular of internal combustion engines, in which, in a component which rotates with the drive system, there is arranged at least one vibration absorber which, in order to be of order-adaptive design, has an absorber mass positioned on a defined absorber radius of rotation and has a guide which holds the absorber mass so as to be enable the latter to vibrate, wherein the absorber mass (2) is connected to the component (1) only via a torsion element (3) which is fixedly connected to the component (1),
**characterized in that** the absorber mass (2) is arranged directly axially adjacent to the rotating component (1) and the torsion element is formed by a torsion spring bar (3), the fastening points of which are positioned with a defined axial spacing (5) to one another on the component (1) and on the absorber mass (2).

2. Device for absorbing rotational vibrations in drive systems, in particular of internal combustion engines, in which, in a component which rotates with the drive system, there is arranged at least one vibration absorber which, in order to be of order-adaptive design, has an absorber mass positioned on a defined absorber radius of rotation and has a guide which holds the absorber mass so as to be enable the latter to vibrate, wherein the absorber mass (7) is connected to the component (6; 10) by means of a flexural spring element (9) integrated into the component (1), such that the absorber mass (7) is integrated by way of at least one at least partially encircling cutout (8) into the component (6; 10), wherein a radially oriented web (9) that remains between the component (6; 10) and the absorber mass (7) serves as flexural spring element, and wherein the component (1) and the absorber mass (7) are a structural unit of unipartite and materially integral form,
**characterized in that** the cutouts (8) are designed in terms of their width such that, acting as stops in a circumferential direction, they allow only a defined rotational angle deflection of the absorber mass (7) in a +/circumferential direction.

3. Device according to Claim 2, **characterized in that** the material strength of the region which serves as flexural spring (9) is increased by hardening, roller-burnishing, shot peening etc.

4. Device according to Claim 2 or 3, **characterized in that** the absorber mass (7) is of circular-sector-shaped design with flanks (7a) which are inclined inward in a V shape.

5. Device according to any of Claims 2 to 4, **characterized in that** the cutouts (8) between the absorber mass (7) and the component (6; 10) end with sections (8b) running in a circumferential direction at the web (9).

6. Device according to any of Claims 2 to 4, **characterized in that** the cutouts (8c) between the absorber mass (7) and the component (6) are formed outwardly along the preferably radially oriented web (9) and into the absorber mass (7).

7. Device according to any of Claims 2 to 6, **characterized in that**, in the case of a component (10) with rotationally symmetrically encircling outer circumference, the absorber mass (7) is integrated entirely into the component (10), wherein the cutout (8), proceeding from the web (9), surrounds the absorber mass (7) over the entire outer circumference thereof, and a web-like circumferential section (10a) is formed between the absorber mass (7) and the component (10).

8. Device according to Claim 7, **characterized in that** the component is the flywheel (10) on the crankshaft of an internal combustion engine, and a starter toothed ring is formed on the outer circumference of the flywheel (10).

9. Device according to any of Claims 2 to 8, **characterized in that** the cutout (8) formed on the absorber mass (7) is worked in by radiation or blasting by laser beams or water jets or focal rays.

10. Device according to any of Claims 2 to 9, **characterized in that** at least one stop element formed preferably by elastic buffers (11, 12) is arranged between those flanks of the component (6) and of the absorber mass (7) which delimit the cutouts (8a).

11. Device according to Claim 10, **characterized in that** the stop element (12) locally completely fills the cutouts (8a) in order to influence the absorber action.

12. Device according to any of Claims 2 to 11, **characterized in that** multiple integrated absorber masses (7) are provided in the rotating component (6; 10), which absorber masses are set to different orders of rotational vibration by way of geometrical construction and configuration.

13. Device according to any of Claims 2 to 12, **characterized in that** counterweights on crankshafts or flywheels (6; 10) or belt pulleys of internal combustion engines and/or flanges on articulated shafts and/or coupling elements are provided as rotating components of the drive system.

## Revendications

1. Dispositif permettant d'amortir des vibrations de torsion dans des systèmes d'entraînement, en particulier de moteurs à combustion interne, dans lequel au moins un amortisseur de vibration est disposé dans un composant tournant avec le système d'entraînement et présente, pour une réalisation adaptative en fonction de l'ordre, une masse d'amortissement positionnée dans un cercle de révolution d'amortissement défini et un guidage maintenant la masse d'amortissement de manière oscillatoire,
la masse d'amortissement (2) n'étant reliée au composant (1) que par un élément de torsion (3) solidaire du composant (1),
**caractérisé en ce que** la masse d'amortissement (2) est disposée axialement à proximité immédiate du composant tournant (1), et l'élément de torsion est formé par une barre de torsion (3) dont les points de fixation sont positionnés à une distance axiale (5) définie les uns par rapport aux autres sur le composant (1) et sur la masse d'amortissement (2).

2. Dispositif permettant d'amortir des vibrations de torsion dans des systèmes d'entraînement, en particulier de moteurs à combustion interne, dans lequel au moins un amortisseur de vibration est disposé dans un composant tournant avec le système d'entraînement et présente, pour une réalisation adaptative en fonction de l'ordre, une masse d'amortissement positionnée dans un cercle de révolution d'amortissement défini et un guidage maintenant la masse d'amortissement de manière oscillatoire,
la masse d'amortissement (7) étant reliée au composant (6 ; 10) par un élément faisant ressort spiral (9) intégré dans le composant (1) de telle sorte que la masse d'amortissement (7) est intégrée dans le composant (6 ; 10) avec au moins une découpe (8) au moins partiellement périphérique, une entretoise (9) orientée radialement, restant entre le composant (6 ; 10) et la masse d'amortissement (7), servant d'élément faisant ressort spiral, et le composant (1) et la masse d'amortissement (7) étant une unité de construction qui est réalisée d'un seul tenant et en une seule matière,
**caractérisé en ce que** les découpes (8) sont réalisées au niveau de leur largeur de telle sorte qu'en agissant comme des butées dans la direction circonférentielle, elles n'autorisent qu'une excursion d'angle de rotation définie de la masse d'amortissement (7) plus ou moins dans la direction circonférentielle.

3. Dispositif selon la revendication 2, **caractérisé en ce que** la zone servant de ressort spiral (9) est améliorée au niveau de sa résistance des matériaux par trempe, par roulage, par grenaillage etc.

4. Dispositif selon la revendication 2 ou 3, **caractérisé en ce que** la masse d'amortissement (7) est réalisée en forme de secteur de cercle avec des flancs (7a) inclinés vers l'intérieur en forme de V.

5. Dispositif selon l'une quelconque des revendications 2 à 4, **caractérisé en ce que** les découpes (8) se terminent à l'entretoise (9) entre la masse d'amortissement (7) et le composant (6 ; 10) par des parties (8b) s'étendant dans la direction circonférentielle.

6. Dispositif selon l'une quelconque des revendications 2 à 4, **caractérisé en ce que** les découpes (8c) sont réalisées entre la masse d'amortissement (7) et le composant (6) le long de l'entretoise (9) orientée de préférence radialement vers l'extérieur et entrant dans la masse d'amortissement (7).

7. Dispositif selon l'une quelconque des revendications 2 à 6, **caractérisé en ce que** pour un composant (10) ayant une circonférence extérieure périphérique en symétrie de révolution, la masse d'amortissement (7) est intégrée complètement dans le composant (10), dans lequel la découpe (8) qui part de l'entretoise (9) entoure la masse d'amortissement (7) sur toute sa circonférence extérieure, et une partie circonférentielle en forme d'entretoise (10a) est formée entre la masse d'amortissement (7) et le composant (10).

8. Dispositif selon la revendication 7, **caractérisé en ce que** le composant est le volant moteur (10) sur le vilebrequin d'un moteur à combustion interne, et une couronne de démarreur est réalisée sur la circonférence extérieure du volant moteur (10).

9. Dispositif selon l'une quelconque des revendications 2 à 8, **caractérisé en ce que** la découpe (8) réalisée sur la masse d'amortissement (7) est incorporée au niveau de la technique de sablage par sablage au laser ou par sablage au jet d'eau ou par sablage à la flamme.

10. Dispositif selon l'une quelconque des revendications 2 à 9, **caractérisé en ce qu'**entre les flancs du composant (6) délimitant les découpes (8a) et la masse d'amortissement (7) est disposé au moins un élément de butée, formé par des tampons (11, 12) de préférence élastiques.

11. Dispositif selon la revendication 10, **caractérisé en ce que** l'élément de butée (12) remplit les découpes (8a) localement complètement pour influencer l'effet d'amortissement.

12. Dispositif selon l'une quelconque des revendications 2 à 11, **caractérisé en ce que** dans le composant tournant (6 ; 10) plusieurs masses d'amortissement (7) intégrées sont prévues qui sont réglées par construction et conception géométriques pour différents ordres de vitesse de rotation.

13. Dispositif selon l'une quelconque des revendications 2 à 12, **caractérisé en ce que** comme composants tournants du système d'entraînement, des contrepoids sur des vilebrequins ou des volants d'inertie (6 ; 10) ou des poulies de moteurs à combustion interne et/ou des brides sur des arbres à cardan et/ou des éléments d'accouplement sont prévus.
